# EUROPEAN PATENT SPECIFICATION

(11) **EP 2 806 515 B1**
(45) Date of publication and mention of the grant of the patent: **03.08.2016**
(21) Application number: 14168858.0
(22) Date of filing: 19.05.2014
(51) Int. Cl.: H02G 3/04

(54) **Raceway assembly for conductor cables, raceway and retainer suitable for being part of said assembly**
Kabelkanalanordnung für Leiterkabel, Kabelkanal und als Teil dieser Einheit geeigneter Halter
Ensemble de chemin de câbles conducteurs, chemin de cable et et élément de retenue propres à faire partie de cet ensemble

(30) Priority: 21.05.2013 ES 201330620 U
(43) Date of publication of application: 26.11.2014
(73) Proprietor: Unex Aparellaje Electrico S.L., 08903 L'Hospitalet de Llobregat (Barcelona) (ES)
(72) Inventor: Salcedo Suñol, D. Eloi, 08620 Sant Vicenç dels Horts (ES)
(74) Representative: Curell Suñol S.L.P.

(56) References cited:
- EP-A1- 1 162 709
- EP-A1- 2 112 732
- WO-A1-99/07048
- CA-A1- 2 348 220
- US-A- 4 990 722
- US-B1- 6 903 265
- US-B1- 7 060 893

## Description

### Field of the invention

The invention relates to a raceway assembly for conductor cables, such as for example electrical cables or fiber optic cables, of the type comprising a raceway with a rectangular-shaped cross-section formed by a horizontal base and two vertical side walls demarcating between one another an open upper face of said raceway, each of said side walls being provided at the upper end thereof with a support configuration for fixing retainers; and at least one retainer formed by a rigid oblong part which detachably snaps at its ends onto said supports of the side walls, such that said retainer thus fixed is arranged in a bridge position, forming a rigid bridge between the upper ends of said side walls of the raceway.

The invention also relates to a raceway and to a retainer suitable for being part of said assembly.

### State of the Art

The applicant has developed such raceway assemblies in the past, described in documents ES2014604A6 and ES1067776U. Although these devices satisfactorily comply with their function, they can be improved. It has particularly been observed (on rare occasions) that installers can accidentally hit one of the retainers fixed in the raceway hard enough to release it, so the installers have to then get it back. It has also been observed that when the raceway is subjected to considerable bending due to the load subjected thereto (the weight of the conductor cables themselves, the weight of the snow built up on the raceway cover, etc.), there is a risk that said bending will cause one of the retainers and/or the raceway cover to be released. The maximum distance between raceway supports is limited to avoid this risk.

### Description of the Invention

The purpose of the invention is to provide a raceway assembly of the type indicated above based on the earlier developments described in the mentioned documents ES2014604A6 and ES1067776U, and in which the fixing of the retainer in the raceway is more robust. Another example according to the preamble of claim 1 is known from WO 99/07048 A.

Another objective of the invention consists of making the retainers provide greater stiffness to the raceway in a robust manner.

Another additional objective is to make the operations that installers must perform easier, particularly while the retainer is not arranged in the final bridge position.

This is achieved by means of a raceway assembly for conductor cables of the type indicated above, according to claim 1. In this assembly, the raceway is characterized in that the support configuration provided at the upper end of the side walls of the raceway comprises an oblique section of the side wall extending towards the central plane of the raceway, a vertical upper leg originating from said oblique section, and there being formed at the end of said oblique section a right angle profile with a vertical wing extending towards the base of the raceway and a horizontal wing extending back towards said vertical upper leg without actually reaching it, such that between said vertical upper leg and the end of said horizontal wing of the right angle profile there is defined an opening towards a cavity demarcated by said oblique section, said vertical upper leg and said horizontal wing. The retainer, in turn, is characterized in that it is provided at each of its ends with at least one elbow-shaped upper tab, having a first horizontal section prolonged by a vertical end section, and at least one lower tab. The upper tab and lower tab of the retainer are sized so that when said retainer is arranged in the bridge position, the first horizontal section of said upper tab is supported on the upper portion of the horizontal wing of the right angle profile, and the vertical end section of said vertical tab is introduced in the cavity through the opening and supported against the vertical upper leg, whereas said lower tab is supported on the lower portion of the oblique section.

This solution according to the invention differs from devices of the prior art, particularly, in that the support configuration provided at the upper end of the side walls of the raceway has an opening towards a cavity in which the vertical end section of the upper tab provided at the end of the retainer is introduced. This provides very firm fixing of the end of the retainer in the support configuration.

Based on the invention defined in the main claim, preferred embodiments the features of which are described in the dependent claims have been provided.

Preferably, in the retainer the upper tab and the lower tab are sized so that when said retainer is arranged in an intermediate inclined position, in which said retainer extends in an inclined direction with respect to the horizontal base of the raceway and is coupled at only one of its ends to one of said support configurations of a side wall of the raceway, the other end of said retainer being in a raised position, said lower tab of the retainer is supported on the outer portion of said vertical wing of the right angle profile, whereas the vertical end section of said upper tab of the retainer is obliquely introduced in the cavity through the opening and is supported on one or several of the walls demarcating said cavity, exerting a force keeping said retainer in said intermediate inclined position. The installers can place the retainer in this intermediate inclined position, which the retainer can hold by itself, and gradually lay the conductor cables inside the raceway without the retainer arranged in that position getting in the way of performing this task.

Furthermore, the lower tab of the retainer preferably comprises at its end a tooth forming an inclined surface such that when said retainer is arranged in the bridge position, said lower tab is supported on the lower portion of the oblique section through said inclined surface of the tooth, which is parallel to the face of said oblique section on which it is supported, and when said retainer is arranged in the intermediate inclined position, said lower tab is supported on the outer portion of said vertical wing of the right angle profile through said inclined surface of the tooth, which is parallel to the face of the vertical wing on which it is supported. This configuration offers, on one hand, a very robust fixing of the retainer in the bridge position, and on the other hand, good retainer stability in the intermediate inclined position.

In several advantageous embodiments, the retainer is provided on at least one of its longitudinal sides with a hook configured for detachably snap fastening said retainer to one of said support configurations of a side wall of the raceway, such that said retainer thus fastened by means of said hook is arranged in a stand-by position, in which said retainer extends longitudinally inside said raceway next to said side wall, said hook being provided with a curved end that is introduced in the opening defined between the vertical upper leg and the end of the horizontal wing of the right angle profile. This solution allows comfortably placing the retainer inside the raceway such that it is properly fastened and does not get in the way, which facilitates assembly packaging and transport to the points where it will be installed, and it also facilitates the operations of the installers who have to work with the assembly. It will be seen that this latter solution, which consists of incorporating a hook on a longitudinal side of the retainer, is itself an invention that is linked to the configuration of the raceway defined in the main claim, but not necessarily to the configuration of the retainer, in relation to the upper tab and lower tab, defined in said claim.

The hook preferably has a shape complementary to the shape of the right angle profile formed at the end of said oblique section. This solution provides a robust fixing of the retainer in the stand-by position.

The raceway preferably comprises on at least one of its side walls a vertical lower leg extending from the oblique section towards the base of the raceway, said vertical lower leg being positioned such that when the retainer is arranged in the stand-by position, a portion of said retainer is supported against said vertical lower leg. A particularly robust fixing of the retainer in the stand-by position is thus obtained.

Preferably, in the raceway the vertical wing of the right angle profile extends towards the base of the raceway, forming a lower projection with respect to the oblique section, and the retainer comprises on the side provided with the hook at least one claw arranged such that when said retainer is arranged in the stand-by position, said claw fits in the corner formed between said lower projection and said oblique section. This solution even further increases the robustness of the fixing of the retainer in the stand-by position.

In advantageous embodiments, the retainer is formed by a plurality of detachable portions distributed in the longitudinal direction of said retainer, said detachable portions being provided at their ends with catch-like portions on the lower face of the retainer. Configuring the retainer in detachable portions, as described in the mentioned documents ES2014604A6 and ES1067776U, for the purpose of being able to use the retainer as a bridge between the side wall of the raceway and an intermediate partition placed in the raceway is known. The improvement introduced by the present invention consists of the detachable portions being attached to one another by side walls of the retainer in which there are through slots extending from the upper face of the retainer towards the lower edge of the side walls of the retainer, but without actually reaching said lower edge. Therefore, the side walls of the retainer are split into sections, corresponding to the detachable portions, which are separated from one another by the through slots but attached by a bridge formed between the end of said slot and the lower edge. This design significantly increases the stiffness of the retainer, without noticeably hindering the detachment of the portions when needed.

The catch-like portions are preferably arranged such that one end of one of said detachable portions has a pair of said catch-like portions which are separated from one another forming a fork, whereas the corresponding end of another one of said detachable portions, adjacent to the former, has a single one of said catch-like portions fitted in said fork formed by said pair of catch-like portions. This configuration is known and described in the mentioned documents ES2014604A6 and ES1067776U. The improvement according to the present invention consists of providing transverse breakable bridges attaching said single catch-like portion to staid pair of catch-like portions, and furthermore, preferably, longitudinal breakable bridges attaching said single catch-like portion to the end of the adjacent detachable portion. The stiffness of the retainer is even further increased as a result of these transverse and longitudinal bridges.

The invention also comprises other detail features illustrated in the following description of an embodiment of the invention and in the attached drawings.

### Brief Description of the Drawings

The advantages and features of the invention will be understood from the following description in which a preferred embodiment of the invention is described in relation to the drawings with a non-limiting character with respect to the scope of the main claim.
Figure 1 is a front view of the raceway.
Figure 2 is an enlarged partial view of the support configuration at the upper end of the side walls of the raceway.
Figures 3 and 4 are front views showing the retainer arranged in the raceway in the intermediate inclined position (Figure 3) and in the bridge position, respectively.
Figures 5 and 6 are a perspective view and a partial front view, respectively, showing the retainer arranged in the raceway in the stand-by position.
Figures 7, 8, 9 and 10 are a top perspective view, a bottom perspective view, a side view and a top plan view, respectively, of the retainer.

### Detailed Description of an Embodiment of the invention

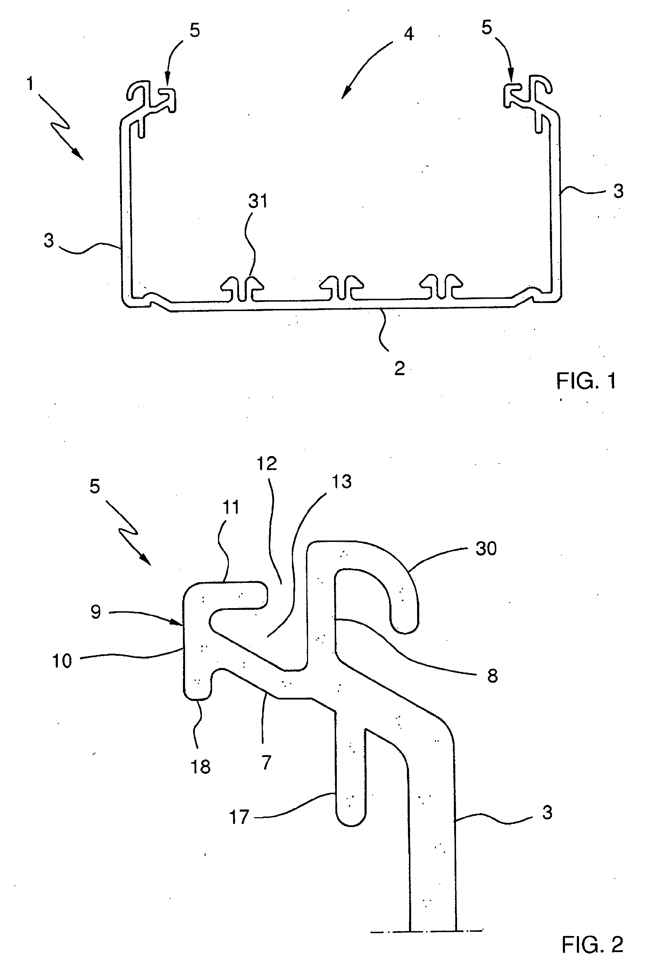

The raceway 1 depicted in Figures 1 and 2 is a profile made from extruded thermoplastic. This raceway 1 has a cross-section shape which is common in raceways used for conductor cables: a horizontal base 2 and two vertical side walls 3 demarcating between one another an open upper face 4. There is formed at the upper end of the side walls 3 a lip 30 which allows fixing a cover (not depicted) for closing the open upper face 4 of the raceway. There are formed at the base 2 of the raceway feet 31 which allow installing longitudinal intermediate partitions (not depicted) used to compartmentalize the raceway 1. All this is known and described, for example, in the mentioned documents ES2014604A6 and ES1067776U.

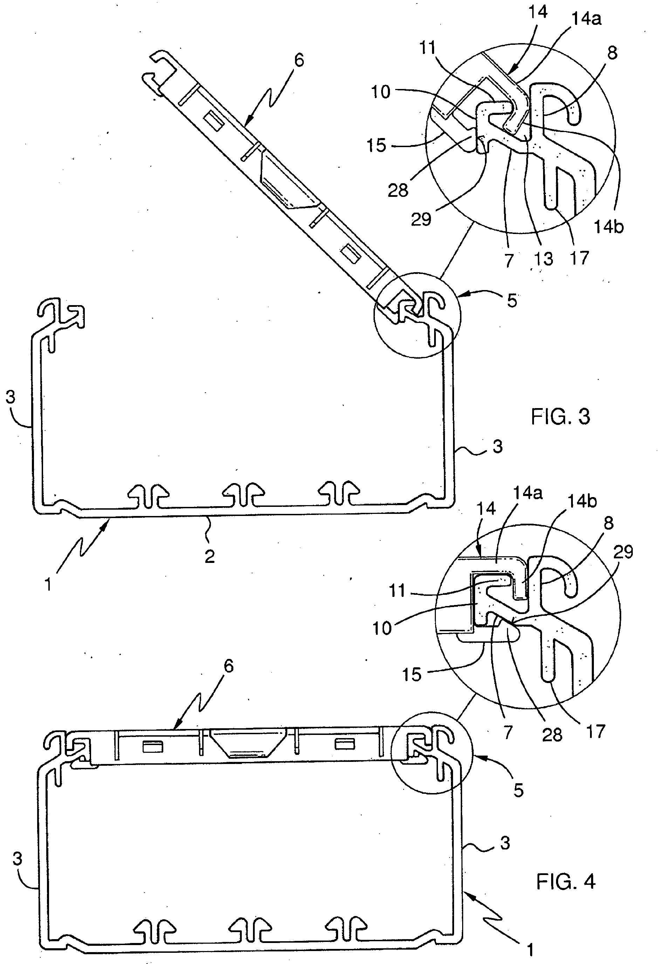

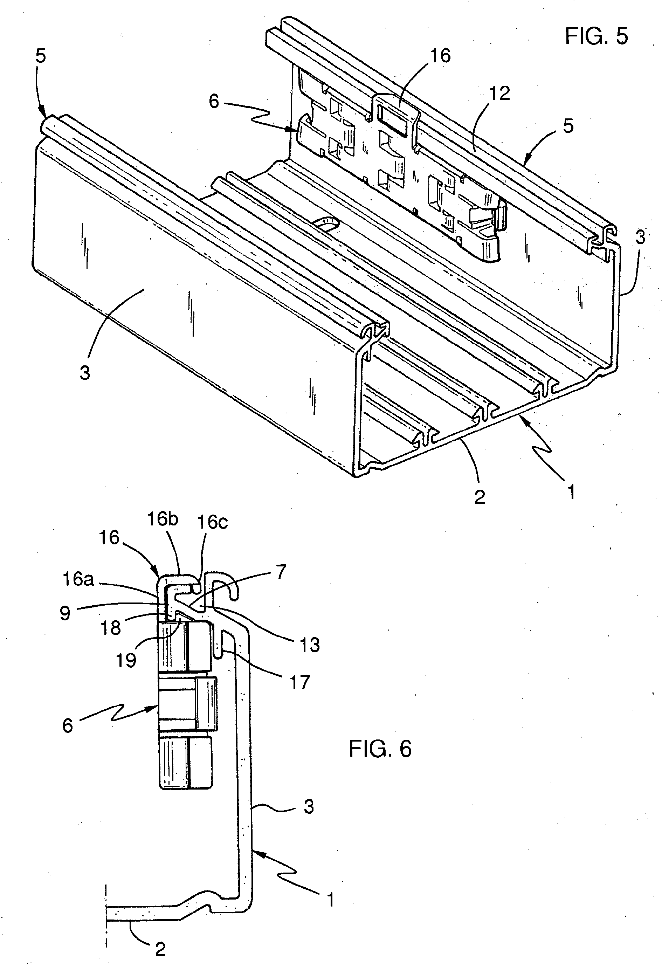

The raceway 1 according to the invention is characterized by the particular shape of the support configuration 5 at the upper end of each of the side walls 3 of the raceway 1, which serves for fixing a retainer 6 custom-designed for this raceway 1. The retainer 6 can be fixed in a bridge position (Figure 4), in an intermediate inclined position (Figure 3), or in a stand-by position (Figures 5-6).

This particular shape of the support configuration 5 (see Figure 2) consists of comprising an oblique section 7 of the side wall 3 of the raceway 1 extending towards the central plane of said raceway 1, a vertical upper leg 8 originating from said oblique section 7, and there being formed at the end of said oblique section 7 a right angle profile 9 with a vertical wing 10 extending towards the base 2 of the raceway and a horizontal wing 11 extending back towards said vertical upper leg 8 without actually reaching it, such that between said vertical upper leg 8 and the end of said horizontal wing 11 of the right angle profile 9 there is defined an opening 12 towards a cavity 13 demarcated by said oblique section 7, said vertical upper leg 8 and said horizontal wing 11. Furthermore, the vertical wing 10 of the right angle profile 9 extends towards the base 2 of the raceway forming a lower projection 18 with respect to said oblique section 7.

The retainer 6 is formed by a rigid oblong part made of molded thermoplastic, and its main purpose consists, in a known manner, of detachably snapping at its ends onto support configurations 5 provided in the side walls 3 of the raceway 1. The retainer 6 thus fixed is arranged in a bridge position such as that shown in Figure 4, forming a rigid bridge between the upper ends of the side walls 3 of the raceway 1. According to the invention, the retainer 6 has two main particularities which are independent from one another, but each of which is related to the particular shape of the support configuration 5 in the raceway.

A first particularity, which allows arranging the retainer 6 in the bridge position (Figure 4) obtaining a particularly robust fixing, consists of said retainer 6 being provided at each of its ends with at least one elbow-shaped upper tab 14, having a first horizontal section 14a prolonged by a vertical end section 14b, and at least one lower tab 15. In the depicted embodiment, the retainer 6 comprises at each of its ends two upper tabs 14 separated from one another and a single lower tab 15 located in the center with respect to said two upper tabs 14. As can be seen particularly in Figure 4, the upper tab 14 and lower tab 15 are sized such that when the retainer 6 is arranged in the bridge position, the first horizontal section 14a of the upper tab 14 is supported on the upper portion of the horizontal wing 11 of the right angle profile 9, the vertical end section 14b of the vertical tab 14 is introduced in the cavity 13 through the opening 12 and is supported against the vertical upper leg 8, and the lower tab 15 is supported on the lower portion of the oblique section 7.

Furthermore, for the purpose of helping the installers with the tasks of laying conductor cables in the raceway 1, the sizing of the upper tab 14 and lower tab 15 is such that when the retainer is arranged in the intermediate inclined position shown in Figure 3, in which said retainer 6 extends in an inclined direction with respect to the horizontal base 2 of the raceway and is coupled at only one of its ends to one of the support configurations 5 of a side wall 3 of the raceway 1, the other end of the retainer 6 being in a raised position, said lower tab 15 is supported on the outer portion of the vertical wing 10 of the right angle profile 9, whereas the vertical end section 14b of said upper tab 14 is obliquely introduced in the cavity 13 through the opening 12 and is supported on one or several of the walls demarcating said cavity 13, thus exerting a force keeping the retainer 6 in the intermediate inclined position.

On the other hand, the lower tab 15 of the retainer 6 comprises at its end a tooth 28 forming an inclined surface 29 such that when the retainer 6 is arranged in the bridge position, as shown in Figure 4, said lower tab 15 is supported on the lower portion of the oblique section 7 through the inclined surface 29 of the tooth 28, which is parallel to the face of the oblique section 7 on which it is supported; and when the retainer 6 is arranged in the intermediate inclined position shown in Figure 3, said lower tab 15 is supported on the outer portion of the vertical wing 10 of the right angle profile 9 through said inclined surface 29 of the tooth 28, which is parallel to the face of said vertical wing 10 on which it is supported.

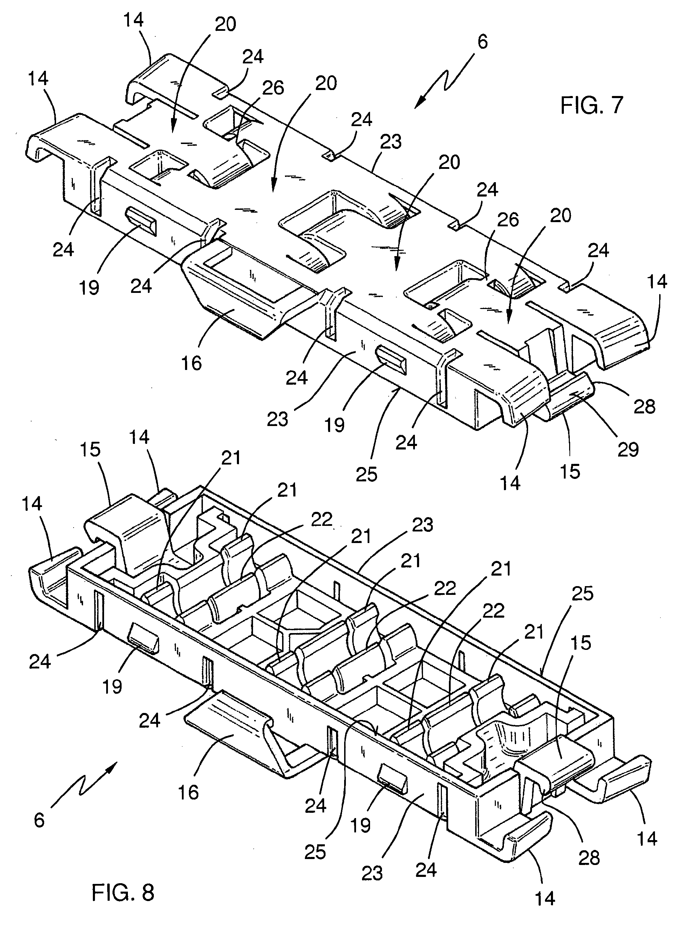

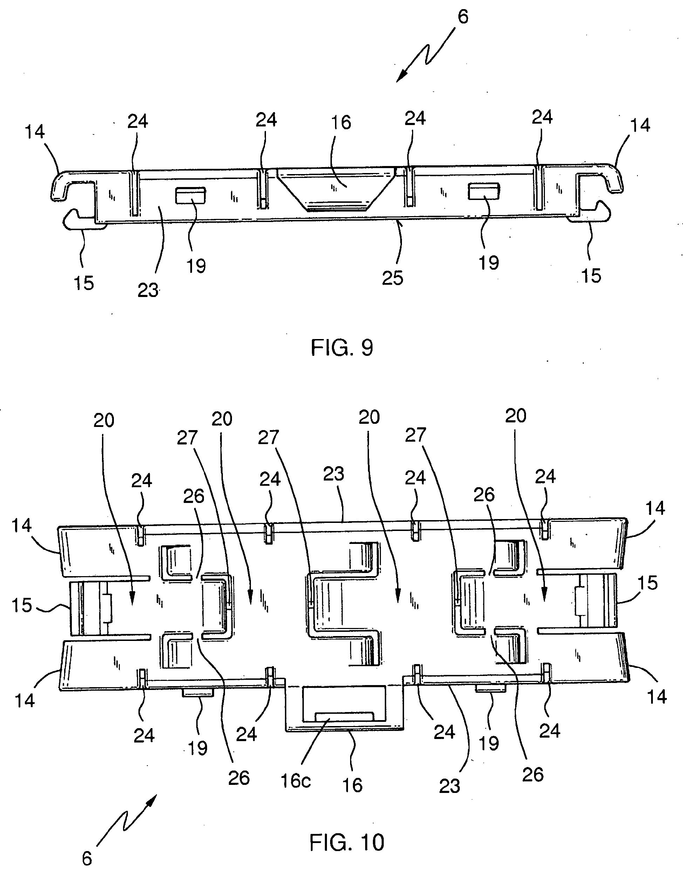

A second particularity, which allows arranging the retainer 6 in the stand-by position shown in Figures 5-6, consists of the retainer 6 being provided on at least one of its longitudinal sides with a hook 16 configured for detachably snap fastening said retainer 6 to one of the support configurations 5 of one of the side walls 3 of the raceway 1. The retainer 6 thus fastened by means of the hook 16 is arranged in the mentioned stand-by position (Figures 5-6), in which said retainer 6 extends longitudinally inside the raceway 1 next to the side wall 3 thereof. Furthermore, as can be seen in Figures 7-10, the retainer 6 comprises on the side provided with the hook 16 at least one claw 19 arranged such that when said retainer 6 is arranged in the stand-by position (Figures 5-6), said claw 19 fits in the corner formed between the lower projection 18 and the oblique section 7. In the embodiment depicted in the drawings, there are two claws 19 and the hook 16 is arranged in the centered position with respect to these two claws 19.

As can be seen in Figure 6, the hook 16 has a shape complementary to the shape of the right angle profile 9 formed at the end of said oblique section 7: said hook 16 has a first straight section 16a extending in the transverse direction of the retainer 6, a second straight section 16b orthogonal to the first, and a curved end 16c which is introduced in the opening 12 defined between the vertical upper leg 8 and the end of the horizontal wing 11 of the right angle profile 9.

On the other hand, as can also be seen in Figure 6, when the retainer 6 is arranged in the stand-by position, a portion thereof is supported against a vertical lower leg 17 of the raceway 1, extending from the oblique section 7 towards the base 2 of said raceway 1.

In the preferred embodiments, such as that depicted in the drawings, the retainer 6 is formed in a known manner by a plurality of detachable portions 20 which are distributed in the longitudinal direction of said retainer 6 and are provided at their ends with catch-like portions 21, 22 on the lower face of said retainer 6. As can be seen in Figures 7, 8 and 10, these catch-like portions 21, 22 are arranged such that one end of one of the detachable portions 20 has a pair of catch-like portions 21 separated from one another forming a fork, whereas the corresponding end of another one of the detachable portions 20, adjacent to the former, has a single catch-like portion 22 fitted in said fork formed by the pair of catch-like portions 21. As shown in the mentioned documents ES2014604A6 and ES1067776U, these catch-like portions 21, 22 are intended for being coupled on the upper edge of an intermediate partition (not depicted in the drawings of the present document). The originality of the invention consists of improvements which seek to make the retainer 6 more rigid. To that end, the detachable portions 20 are attached to one another by side walls 23 of the retainer 6 in which there are through slots 24 extending from the upper face of said retainer 6 towards the lower edge 25 of said side walls 23 without actually reaching said lower edge 25. Transverse breakable bridges 26 attaching the single catch-like portion 22 to the pair of corresponding catch-like portions 21 are also provided. Longitudinal breakable bridges 27 attaching the single catch-like portion 22 to the end of the adjacent detachable portion 20 are also provided.

## Claims

1. A raceway assembly for conductor cables, comprising a raceway (1) with a rectangular-shaped cross-section formed by a horizontal base (2) and two vertical side walls (3) demarcating between one another an open upper face (4) of said raceway (1), each of said side walls (3) being provided at the upper end thereof with a support configuration (5) for fixing retainers (6); and at least one retainer (6) formed by a rigid oblong part which detachably snaps at its ends onto said support configurations (5) of the side walls (3), such that said retainer (6) thus fixed is arranged in a bridge position, forming a rigid bridge between the upper ends of said side walls (3) of the raceway (1); **characterized in that** said support configuration (5) comprises an oblique section (7) of said side wall (3) extending towards the central plane of said raceway (1), a vertical upper leg (8) originating from said oblique section (7), and there being formed at the end of said oblique section (7) a right angle profile (9) with a vertical wing (10) extending towards the base (2) of the raceway (1) and a horizontal wing (11) extending back towards said vertical upper leg (8) without actually reaching it, such that between said vertical upper leg (8) and the end of said horizontal wing (11) of the right angle profile (9) there is defined an opening (12) towards a cavity (13) demarcated by said oblique section (7), said vertical upper leg (8) and said horizontal wing (11), and **in that** said at least one retainer (6) is provided at each of its ends with at least one elbow-shaped upper tab (14), having a first horizontal section (14a) prolonged by a vertical end section (14b) and at least one lower tab (15), said upper tab (14) and lower tab (15) of the retainer (6) being sized so that when said retainer (6) is arranged in said bridge position, said first horizontal section (14a) of the upper tab (14) is supported on the upper portion of said horizontal wing (11) of the right angle profile (9) and said vertical end section (14b) of the vertical tab (14) is introduced in said cavity (13) through said opening (12) and supported against said vertical upper leg (8), whereas said lower tab (15) is supported on the lower portion of said oblique section (7).

2. The raceway assembly for conductor cables according to claim 1, **characterized in that** in said retainer (6), said upper tab (14) and said lower tab (15) are sized so that when said retainer is arranged in an intermediate inclined position, in which said retainer (6) extends in an inclined direction with respect to the horizontal base (2) of the raceway (1) and is coupled at only one of its ends to one of said support configurations (5) of a side wall (3) of the raceway (1), the other end of said retainer (6) being in the raised position, said lower tab (15) of the retainer (6) is supported on the outer portion of said vertical wing (10) of the right angle profile (9), whereas said vertical end section (14b) of the upper tab (14) of the retainer (6) is obliquely introduced in said cavity (13) through said opening (12) and is supported on one or several of the walls demarcating said cavity (13), exerting a force keeping said retainer (6) in said intermediate inclined position.

3. The raceway assembly for conductor cables according to claim 2, **characterized in that** in said retainer (6), said lower tab (15) comprises at its end a tooth (28) forming an inclined surface (29) such that when said retainer (6) is arranged in said bridge position, said lower tab (15) is supported on the lower portion of said oblique section (7) through said inclined surface (29) of the tooth (28), which is parallel to the face of said oblique section (7) on which it is supported, and when said retainer (6) is arranged in said intermediate inclined position, said lower tab (15) is supported on the outer portion of said vertical wing (10) of the right angle profile (9) through said inclined surface (29) of the tooth (28), which is parallel to the face of said vertical wing (10) on which it is supported.

4. The raceway assembly for conductor cables according to any of claims 1 to 3, **characterized in that** said retainer (6) is provided on at least one of its longitudinal sides with a hook (16) configured for detachably snap fastening said retainer (6) to one of said support configurations (5) of a side wall (3) of the raceway (1), such that said retainer (6) thus fastened by means of said hook (16) is arranged in a stand-by position, in which said retainer (6) extends longitudinally inside said raceway (1) next to said side wall (3), said hook (16) being provided with a curved end (16c) that is introduced in said opening (12) defined between said vertical upper leg (8) and the end of said horizontal wing (11) of the right angle profile (9).

5. The raceway assembly according to claim 4, **characterized in that** said hook (16) has a shape complementary to the shape of said right angle profile (9) formed at the end of said oblique section (7).

6. The raceway assembly according to claim 4 or 5, **characterized in that** on at least one of said side walls (3) said raceway (1) comprises a vertical lower leg (17) extending from said oblique section (7) towards said base (2) of the raceway (1), said vertical lower leg (17) being positioned such that when said retainer (6) is arranged in said stand-by position, a portion of said retainer (6) is supported against said vertical lower leg (17).

7. The raceway assembly according to any of claims 4 to 6, **characterized in that** in the raceway (1) said vertical wing (10) of the right angle profile (9) extends towards said base (2) of the raceway (1) forming a lower projection (18) with respect to said oblique section (7), and **in that** the retainer (6) comprises on the side provided with said hook (16) at least one claw (19) arranged such that when said retainer (6) is arranged in said stand-by position, said claw (19) fits in the corner formed between said lower projection (18) and said oblique section (7).

8. A raceway (1) of the raceway assembly for conductor cables according to claim 1, said raceway (1) having a rectangular-shaped cross-section and being formed by a horizontal base (2) and two vertical side walls (3) demarcating between one another an open upper face (4) of said raceway (1), each of said side walls (3) being provided at the upper end thereof with a support configuration (5) for fixing retainers (6), said raceway (1) being **characterized in that** said support configuration (5) comprises an oblique section (7) of said side wall (3) extending towards the central plane of said raceway (1), a vertical upper leg (8) originating from said oblique section (7), and there being formed at the end of said oblique section (7) a right angle profile (9) with a vertical wing (10) extending towards the base (2) of the raceway (1) and a horizontal wing (11) extending back towards said vertical upper leg (8) without actually reaching it, such that between said vertical upper leg (8) and the end of said horizontal wing (11) of the right angle profile (9) there is defined an opening (12) towards a cavity (13) demarcated by said oblique section (7), said vertical upper leg (8) and said horizontal wing (11).

9. The raceway (1) according to claim 8, **characterized in that** it comprises in at least one of said side walls (3) a vertical lower leg (17) extending from said oblique section (7) towards said base (2) of the raceway (1).

10. The raceway according to any of claims 8 or 9, **characterized in that** said vertical wing (10) of the right angle profile (9) extends towards said base (2) of the raceway (1) forming a lower projection (18) with respect to said oblique section (7).

## Patentansprüche

1. Kabelkanalanordnung für Leitungskabel, mit einem Kabelkanal (1) mit rechtwinkligem Querschnitt, der durch eine horizontale Basis (2) und zwei vertikale Seitenwände (3) gebildet ist, die zwischen einander eine offene Oberseite (4) des Kabelkanals (1) eingrenzen, wobei jede der Seitenwände (3) an ihrem oberen Ende mit einer Stützkonfiguration (5) zum Befestigen von Haltern (6) versehen ist; und wenigstens einem Halter (6), der durch einen starren länglichen Teil gebildet ist, der an seinen Enden lösbar in die Stützkonfigurationen (5) der Seitenwände (3) einschnappt, so dass der so befestigte Halter (6) in einer Brückenposition angebracht ist, die eine starre Brücke zwischen den oberen Enden der Seitenwände (3) des Kabelkanals (1) bildet; **dadurch gekennzeichnet, dass** die Stützkonfiguration (5) einen schrägen Abschnitt (7) der Seitenwand (3) aufweist, der zur Mittelebene des Kabelkanals (1) verläuft, sowie einen vertikalen oberen Schenkel (8), der von dem schrägen Abschnitt (7) ausgehend verläuft, und wobei an dem Ende des schrägen Abschnitts (7) ein rechtwinkliges Profil (9) gebildet ist mit einem vertikalen Flügel (10), der zu der Basis (2) des Kabelkanals (1) verläuft, und einem horizontalen Flügel (11), der rückwärts zu dem vertikalen oberen Schenkel (8) verläuft ohne diesen tatsächlich zu erreichen, so dass zwischen dem vertikalen oberen Schenkel (8) und dem Ende des horizontalen Flügels (11) des rechtwinkligen Profils (9) eine Öffnung (12) zu einem Hohlraum (13) definiert ist, der durch den schrägen Abschnitt (7), den vertikalen oberen Schenkel (8) und den horizontalen Flügel (11) eingegrenzt ist, und dadurch, dass wenigstens ein Halter (6) an jedem seiner Enden mit wenigstens einem ellbogenförmigen oberen Fortsatz (14) versehen ist, der einen ersten horizontalen Abschnitt (14a) verlängert um einen vertikalen Endabschnitt (14b) und wenigstens einen unteren Fortsatz (15) aufweist, wobei der obere Fortsatz (14) und der untere Fortsatz (15) des Halters (6) so bemessen sind, dass wenn der Halter in der Brückenposition angebracht ist, der erste horizontale Abschnitt (14a) des oberen Fortsatzes (14) auf dem oberen Bereich des horizontalen Flügels (11) des rechtwinkligen Profils (9) und der vertikale Endabschnitt (14b) des vertikalen Fortsatzes (14) durch die Öffnung (12) in den Hohlraum (13) eingeführt und gegen den vertikalen oberen Schenkel (8) abgestützt ist, währen der untere Fortsatz (15) auf dem unteren Bereich des schrägen Abschnitts (7) abgestützt ist.

2. Kabelkanalanordnung für Leitungskabel nach Anspruch 1, **dadurch gekennzeichnet, dass** der Halter (6), der obere Fortsatz (14) und der untere Fortsatz (15) so bemessen sind, dass, wenn der Halter in einer geneigten Zwischenposition angebracht ist, in der der Halter (6) in einer geneigten Richtung bezüglich der horizontalen Basis (2) des Kabelkanals (1) verläuft und nur an einem seiner Enden mit einer der Stützkonfigurationen (5) der Seitenwand (3) des Kabelkanals (1) verbunden ist, das andere Ende des Halters (6) in einer erhabenen Position ist, der untere Fortsatz (15) des Halters (6) auf dem äußeren Bereich des vertikalen Flügels (10) des rechtwinkligen Profils (9) abgestützt ist, während der vertikale Endabschnitt (14b) des oberen Fortsatzes (14) des Halters (6) schräg durch die Öffnung (12) in den Hohlraum (13) eingeführt und auf einer oder mehrerer der Wände abgestützt ist, die den Hohlraum (13) eingrenzen, wobei eine Kraft ausgeübt wird, die den Halter (6) in der geneigten Zwischenposition hält.

3. Kabelkanalanordnung für Leitungskabel nach Anspruch 2, **dadurch gekennzeichnet, dass** in dem Halter (6) der untere Fortsatz (15) an seinem Ende eine Zahnung (28) aufweist, die eine geneigte Fläche (29) bildet, so dass, wenn der Halter (6) in der Brückenposition angebracht ist, der untere Fortsatz (15) durch die geneigte Fläche (29) der Zahnung (28) auf dem unteren Bereich des schrägen Abschnitts (7) abgestützt ist, wobei die Zahnung parallel zu der Seite des schrägen Abschnitts (7) verläuft, auf der sie abgestützt ist, und, wenn der Halter (6) in der geneigten Zwischenposition angebracht ist, der untere Fortsatz (15) durch die geneigte Fläche (29) der Zahnung (28) auf dem äußeren Bereich des vertikalen Flügels (10) des rechtwinkligen Profils (9) abgestützt ist, wobei die Zahnung parallel zu der Seite des vertikalen Flügels (10) verläuft, auf der sie abgestützt ist.

4. Kabelkanalanordnung für Leitungskabel nach einem der Ansprüche 1 bis 3, **dadurch gekennzeichnet, dass** der Halter (6) an wenigstens einer seiner Längsseiten mit einem Haken (16) versehen ist, der dazu ausgelegt ist, den Halter (6) durch eine lösbare Schnappbefestigung an einer der Stützkonfigurationen (5) einer Seitenwand (3) des Kabelkanals (1) anzubringen, so dass der so mittels des Hakens (16) befestigte Halter (6) in einer Warteposition angebracht ist, in der der Halter (6) longitudinal innerhalb des Kabelkanals (1) neben der Seitenwand (3) verläuft, wobei der Haken (16) mit einem gekrümmten Ende (16c) versehen ist, das in die Öffnung (12) eingeführt ist, die zwischen dem vertikalen oberen Schenkel (8) und dem Ende des horizontalen Flügels (11) des rechtwinkligen Profils (9) definiert ist.

5. Kabelkanalanordnung nach Anspruch 4, **dadurch gekennzeichnet, dass** der Haken (16) eine Form aufweist, die komplementär ist zu der Form des rechtwinkligen Profils (9), das an dem Ende des schrägen Abschnitts (7) gebildet ist.

6. Kabelkanalanordnung nach Anspruch 4 oder 5, **dadurch gekennzeichnet, dass** an wenigstens einer der Seitenwände (3) der Kabelkanal (1) einen vertikalen unteren Schenkel (17) aufweist, der von dem schrägen Abschnitt (7) zu der Basis (2) des Kabelkanals (1) verläuft, wobei der vertikale untere Schenkel (17) so positioniert ist, dass, wenn der Halter (6) in der Warteposition angebracht ist, ein Bereich des Halters (6) gegen den vertikalen unteren Schenkel (17) abgestützt ist.

7. Kabelkanalanordnung nach einem der Ansprüche 4 bis 6, **dadurch gekennzeichnet, dass** in dem Kabelkanal (1) der vertikale Flügel (10) des rechtwinkligen Profils (9) zu der Basis (2) des Kabelkanals (1) verläuft, der einen unteren Vorsprung (18) bezüglich des schrägen Abschnitts (7) bildet, und dadurch, dass der Halter (6) auf der mit dem Haken (16) versehenen Seite wenigstens eine Klaue (19) aufweist, die so angebracht ist, dass, wenn der Halter (6) in der Warteposition angebracht ist, die Klaue (19) in die zwischen dem unteren Vorsprung (18) und dem schrägen Abschnitt (7) gebildete Ecke passt.

8. Kabelkanal (1) der Kabelkanalanordnung für Leitungskabel nach Anspruch 1, wobei der Kabelkanal (1) einen rechtwinkligen Querschnitt hat und durch eine horizontale Basis (2) und zwei vertikale Seitenwände (3) gebildet ist, die zwischen einander eine offene Oberseite (4) des Kabelkanals (1) eingrenzen, wobei jede der Seitenwände (3) an ihrem oberen Ende mit einer Stützkonfiguration (5) zur Befestigung von Haltern (6) versehen ist, wobei der Kabelkanal (1) **dadurch gekennzeichnet ist, dass** die Stützkonfiguration (5) einen schrägen Abschnitt (7) der Seitenwand (3) aufweist, der zu der Mittelebene des Kabelkanals (1) verläuft, sowie einen vertikalen oberen Schenkel (8), der von dem schrägen Abschnitt (7) ausgeht, und an dem Ende des schrägen Abschnitts (7) ein rechtwinkliges Profil (9) gebildet ist mit einem vertikalen Flügel (10), der zu der Basis (2) des Kabelkanals (1) verläuft, und einem horizontalen Flügel (11), der zurück zu dem vertikalen oberen Schenkel (8) verläuft, ohne diesen tatsächlich zu erreichen, so dass zwischen dem vertikalen oberen Schenkel (8) und dem Ende des horizontalen Flügels (11) des rechtwinkligen Profils (9) eine Öffnung (12) zu einem Hohlraum (13) definiert ist, der durch den schrägen Abschnitt (7), den vertikalen oberen Schenkel (8) und den horizontalen Flügel (11) eingegrenzt ist.

9. Kabelkanal (1) nach Anspruch 8, **dadurch gekennzeichnet, dass** er an wenigstens einer der Seitenwände (3) einen vertikalen unteren Schenkel (17) aufweist, der von dem schrägen Abschnitt (7) zu der Basis (2) des Kabelkanals (1) verläuft.

10. Kabelkanal nach einem der Ansprüche 8 oder 9, **dadurch gekennzeichnet, dass** der vertikale Flügel (10) des rechtwinkligen Profils (9) zu der Basis (2) des Kabelkanals (1) verläuft, der einen unteren Vorsprung (18) bezüglich des schrägen Abschnitts (7) bildet.

## Revendications

1. Ensemble de chemin de câbles pour câbles conducteurs, comprenant un chemin de câbles (1) avec une section transversale de forme rectangulaire formée par une base horizontale (2) et deux parois latérales verticales (3) délimitant entre elles, une face supérieure ouverte (4) dudit chemin de câbles (1), chacune desdites parois latérales (3) étant prévue, au niveau de son extrémité supérieure, avec une configuration de support (5) pour fixer des dispositifs de retenue (6) ; et au moins un dispositif de retenue (6) formé par une partie oblongue rigide qui s'encliquette de manière détachable, au niveau de ses extrémités, sur lesdites configurations de support (5) des parois latérales (3), de sorte que ledit dispositif de retenue (6) ainsi fixé est agencé dans une position de pont, formant un pont rigide entre les extrémités supérieures desdites parois latérales (3) du chemin de câbles (1) ; **caractérisé en ce que** ladite configuration de support (5) comprend une section oblique (7) de ladite paroi latérale (3) s'étendant vers le plan central dudit chemin de câbles (1), une patte supérieure verticale (8) prenant son origine à partir de ladite section oblique (7) et formant à cet endroit, au niveau de l'extrémité de ladite section oblique (7), un profil d'angle droit (9) avec une aile verticale (10) s'étendant vers la base (2) du chemin de câbles (1) et une aile horizontale (11) revenant vers ladite patte supérieure verticale (8) sans vraiment l'atteindre, de sorte qu'entre ladite patte supérieure verticale (8) et l'extrémité de ladite aile horizontale (11) du profil d' angle droit (9), on définit une ouverture (12) vers une cavité (13) délimitée par ladite section oblique (7), ladite patte supérieure verticale (8) et ladite aile horizontale (11), et **en ce que** ledit au moins un dispositif de retenue (6) est prévu, au niveau de chacune de ses extrémités, avec au moins une languette supérieure en forme de coude (14) ayant une première section horizontale (14a) prolongée par une section d'extrémité verticale (14b) et au moins une languette inférieure (15), ladite languette supérieure (14) et la languette inférieure (15) du dispositif de retenue (6) étant dimensionnées de sorte que lorsque ledit dispositif de retenue (6) est agencé dans ladite position de pont, ladite première section horizontale (14a) de la languette supérieure (14) est supportée sur la partie supérieure de ladite aile horizontale (11) du profil d'angle droit (9) et ladite section d'extrémité verticale (14b) de la languette verticale (14) est introduite dans ladite cavité (13) par ladite ouverture (12) et supportée contre ladite patte supérieure verticale (8), alors que ladite languette inférieure (15) est supportée sur la partie inférieure de ladite section oblique (7).

2. Ensemble de chemin de câbles pour câbles conducteurs selon la revendication 1, **caractérisé en ce que** dans ledit dispositif de retenue (6), ladite languette supérieure (14) et ladite languette inférieure (15) sont dimensionnées de sorte que lorsque ledit dispositif de retenue est agencé dans une position inclinée intermédiaire dans laquelle ledit dispositif de retenue (6) s'étend dans une direction inclinée par rapport à la base horizontale (2) du chemin de câbles (1) et est couplé uniquement au niveau de l'une de ses extrémités à l'une desdites configurations de support (5) d'une paroi latérale (3) du chemin de câbles (1), l'autre extrémité dudit dispositif de retenue (6) étant dans la position levée, ladite languette inférieure (15) du dispositif de retenue (6) est supportée sur la partie externe de ladite aile verticale (10) du profil d'angle droit (9), alors que ladite section d'extrémité verticale (14b) de la languette supérieure (14) du dispositif de retenue (6) est introduite obliquement dans ladite cavité (3) à travers ladite ouverture (12) et est supportée sur une ou plusieurs des parois délimitant ladite cavité (13), exerçant une force maintenant ledit dispositif de retenue (6) dans ladite position inclinée intermédiaire.

3. Ensemble de chemin de câbles pour câbles conducteurs selon la revendication 2, **caractérisé en ce que**, dans ledit dispositif de retenue (6), ladite languette inférieure (15) comprend, au niveau de son extrémité, une dent (28) formant une surface inclinée (29) de sorte que lorsque ledit dispositif de retenue (6) est agencé dans ladite position de pont, ladite languette inférieure (15) est supportée sur la partie inférieure de ladite section oblique (7) à travers ladite surface inclinée (29) de la dent (28), qui est parallèle à la face de ladite section oblique (7) sur laquelle elle est supportée, et lorsque ledit dispositif de retenue (6) est agencé dans ladite position inclinée intermédiaire, ladite languette inférieure (15) est supportée sur la partie externe de ladite aile verticale (10) du profil d'angle droit (9) à travers ladite surface inclinée (29) de la dent (28) qui est parallèle à la face de ladite aile verticale (10) sur laquelle elle est supportée.

4. Ensemble de chemin de câbles pour câbles conducteurs selon l'une quelconque des revendications 1 à 3, **caractérisé en ce que** ledit dispositif de retenue (6) est prévu au niveau d'au moins l'un de ses côtés longitudinaux avec un crochet (16) configuré pour fixer par encliquetage de manière détachable ledit dispositif de retenue (6) à l'une desdites configurations de support (5) d'une paroi latérale (3) du chemin de câbles (1), de sorte que ledit dispositif de retenue (6) ainsi fixé au moyen dudit crochet (16), est agencé dans une position d'attente, dans laquelle ledit dispositif de retenue (6) s'étend longitudinalement à l'intérieur dudit chemin de câbles (1) à côté de ladite paroi latérale (3), ledit crochet (16) étant prévu avec une extrémité incurvée (16c) qui est introduite dans ladite ouverture (12) définie entre ladite patte supérieure verticale (8) et l'extrémité de ladite aile horizontale (11) du profil d'angle droit (9).

5. Ensemble de chemin de câbles selon la revendication 4, **caractérisé en ce que** ledit crochet (16) a une forme complémentaire de la forme dudit profil d'angle droit (9) formé à l'extrémité de ladite section oblique (7).

6. Ensemble de chemin de câbles selon la revendication 4 ou 5, **caractérisé en ce que**, sur au moins l'une desdites parois latérales (3), ledit chemin de câbles (1) comprend une patte inférieure verticale (17) s'étendant à partir de ladite section oblique (7) vers ladite base (2) du chemin de câbles (1), ladite patte inférieure verticale (17) tant positionnée de sorte que lorsque ledit dispositif de retenue (6) est agencé dans ladite position d'attente, une partie dudit dispositif de retenue (6) est supportée contre ladite patte inférieure verticale (17).

7. Ensemble de chemin de câbles selon l'une quelconque des revendications 4 à 6, **caractérisé en ce que**, dans ledit chemin de câbles (1), ladite aile verticale (10) du profil d'angle droit (9) s'étend vers ladite base (2) dudit chemin de câbles (1) formant une saillie inférieure (18) par rapport à ladite section oblique (7) et **en ce que** le dispositif de retenue (6) comprend, sur le côté prévu avec ledit crochet (16), au moins une griffe (19) agencée de sorte que lorsque ledit dispositif de retenue (6) est agencé dans ladite position d'attente, ladite griffe (19) est montée dans le coin formé entre ladite saillie inférieure (18) et ladite section oblique (7).

8. Chemin de câbles (1) de l'ensemble de chemin de câbles pour câbles conducteurs selon la revendication 1, ledit chemin de câbles (1) ayant une section transversale de forme rectangulaire et étant formé par une base horizontale (2) et deux parois latérales verticales (3) délimitant entre elles, une face supérieure ouverte (4) dudit chemin de câbles (1), chacune desdites parois latérales (3) étant prévue au niveau de son extrémité supérieure avec une configuration de support (5) pour fixer des dispositifs de retenue (6), ledit chemin de câbles (1) étant **caractérisé en ce que** ladite configuration de support (5) comprend une section oblique (7) de ladite paroi latérale (3) s'étendant vers le plan central dudit chemin de câbles (1), une patte supérieure verticale (8) tirant son origine de ladite section oblique (7), et à cet endroit on forme, au niveau de l'extrémité de ladite section oblique (7), un profil d'angle droit (9) avec une aile verticale (10) s'étendant vers la base (2) du chemin de câbles (1) et une aile horizontale (11) revenant vers ladite patte supérieure verticale (8) sans vraiment l'atteindre, de sorte qu'entre ladite patte supérieure verticale (8) et l'extrémité de ladite aile horizontale (11) du profil d'angle droit (9), on définit une ouverture (12) vers une cavité (13) délimitée par ladite section oblique (7), ladite patte supérieure verticale (8) et ladite aile horizontale (11).

9. Chemin de câbles (1) selon la revendication 8, **caractérisé en ce qu'**il comprend, dans au moins l'une desdites parois latérales (3), une patte inférieure verticale (17) s'étendant à partir de ladite section oblique (7) vers ladite base (2) du chemin de câbles (1).

10. Chemin de câbles (1) selon l'une quelconque des revendications 8 ou 9, **caractérisé en ce que** ladite aile verticale (10) du profil d'angle droit (9) s'étend vers ladite base (2) du chemin de câbles (1) formant une saillie inférieure (18) par rapport à ladite section oblique (7).
